# EUROPEAN PATENT APPLICATION

(11) **EP 1 254 604 A1**
(43) Date of publication of application: **06.11.2002**
(21) Application number: 01204256.0
(22) Date of filing: 08.11.2001
(51) Int. Cl.: A23J 1/00, A23J 3/20, C12N 1/14

(54) **Semi-finished product for the preparation of a meat substitute**

(30) Priority: 09.11.2000 EP 00203946
(71) Applicant: Cebeco Groep B.V., 3011 GA Rotterdam (NL)
(72) Inventor: Murphy, Patrick, Sligotown (IE); Wildenbeest, Hubertus Hendrikus Maria, 7007 CC Doetinchem (NL); Ros, Albert Jacobus, 3843 AK Harderwijk (NL); Capelle, Anthony, 3958 CT Amerongen (NL)
(74) Representative: Van Someren, Petronella F. H. M.

(57) **Abstract**

The invention relates a semi-finished product for use as or in a meal component, in particular a meat substitute, comprising at least the ingredients mushrooms or parts thereof, fibers, one or more proteins, at least a part of which is textured protein; one or more binding agents; and water. The invention further relates to a meat substitute based on the semi-finished product as claimed and to methods for preparing both semi-finished products and end-products, such as meat substitutes.

## Description

The present invention relates to a semi-finished product for use in or as a meal component, in particular a meat substitute, based on mushrooms and to a method for making same.

Meat as a traditional part of the diet in at least the Western society is loosing ground. Consumers become more and more critical about their food. An increasing amount of consumers has doubts about the way in which nowadays animals are treated and meat is produced. Furthermore, various diseases, such as BSE, swine fever, Salmonella etc. have led to an increased interest in alternatives for meat and poultry. In addition to the people who occasionally use a meat alternative (so-called "part-time vegetarians"), there are the true vegetarians that do not eat meat at all. They too are a potential market for alternative meat substitutes.

Whereas true vegetarians do not necessarily require their food to look, feel and taste like meat, it is found that part-time vegetarians do. The new meat substitutes take the form of burgers, meat balls, nuggets, steaks, schnitzels etc. An important feature of these substitutes, besides their taste is their mouth feel. Where the traditional soya based products like tofu, tempeh and textured vegetable protein can be flavored to resemble meat, their texture is still sponge-like. The present consumer does not find this mouth feel acceptable.

The mouth feel is improved in products based on mycoprotein, for example sold under the brand name Quorn™. Mycoprotein is a food made by continuous fermentation of the fungus Fusarium gramineurum. After harvesting, the fungus is heat treated, filtered and drained and the fungal mycelium thus obtained is mixed with a binder, such as egg albumin and textured to resemble meat. Mycoprotein requires relatively expensive fermentation steps for its production.

In view of the above it is the object of the present invention to provide a new product that can be used in or as a meal component such as a meat substitute, that has an acceptable mouth feel and can be produced in a more cost-effective manner than mycoprotein.

This object is achieved by a semi-finished product for use in or as a meal component, in particular a meat substitute, comprising at least the following ingredients: mushrooms or parts thereof; fibers; one or more proteins at least part of which is textured protein; one or more binding agents and water.

These ingredients can be combined to obtain a dough or paste. Preferably the textured protein is added after a pre-dough is prepared from the other ingredients and at least part of the water. The textured protein is usually in dry form and needs to be soaked first with the remained of the water before addition to the pre-dough.

It was found that the presence of an amount of textured protein, in particular textured pea protein, greatly improved the "bite", juiciness and succulence of the end-product. Depending on the end-product the portion of the textured protein may vary.

The textured protein is a vegetable protein, but not textured soy protein. A lot of soy protein offered in the market place is genetically modified and the present invention wishes to avoid such ingredients. It was found that textured pea protein is in particular suitable for use in the product of the invention.

The textured protein is obtained by extruding via either a single screw or twin screw extruder at a temperature above 60°C.

The invention relates inter alia to a "semi-finished product". This term is used to indicated that the product can be further processed to obtain an "end-product". The product of the invention usually takes the form of a dough or homogenous paste. This dough or paste can be further formed into an end-product. The end-product constitutes either the product bought by the consumer as a meat substitute ("consumer end-product") or bought by manufacturers of for example soups ("ingredient end-product"). The two applications require usually different steps to obtain the end-product.

To prepare a consumer end-product the dough is formed to resemble a real meat product. For this, further seasoning or coloration may be required or coating with breadcrumbs or batter. The meat substitute of the invention thus obtained can for example take the form of slices, sausages, nuggets, mince, strips, dices, burgers, extruded products such as Dutch frikandels and meatballs.

For use in instant products, such as soups, noodle dishes or sauces, the dough can be diced or otherwise diminuted and added as such. The ingredient end-product is however preferably in a dried form, which highly improves the shelf-life thereof. The dried form can for example be obtained by freeze drying or air drying. The product can then be rehydrated in water, preferably in boiling or near-boiling water. Dried dices are for example especially suited for use in instant soups or noodle dishes.

All these types of end-products form also part of this invention.

According to the invention, both fresh mushrooms and dried mushrooms can be used, but preferably hydrated dried mushrooms are used. It is clear that all edible mushrooms are suitable for use in this invention. Examples of such edible mushrooms are all varieties of champignons of the species Agaricus bisporus (such as white mushrooms, crimini or portabella's), Agaricus campester, Psalliota arvensis, Pleurotus spp., in particular Pleurotus osteatus (oyster mushroom), Lentinus edodes (shiitake), Hypsizygus tessulatus (beech mushroom), Cantharellus cibarius, Boletus edulis, Grifola frondosa (Hen of the woods or maitake), Flammulina veluptipes (enoki), Morchella esculentia (morel).

To obtain a true vegetable product, the fibers are preferably vegetable fibers. Fibers are added to the product to further improve the mouth feel, i.e. "bite" of the end-product. It has been found that fibers of pulses and in particular pea fibers lead to a product that has a good "bite". The pea fibers may be derived from the inner cell wall, but it is preferred to use the outer hull fibers since these provide a better "bite". Yellow pea fibers are preferred because there is less need to conceal their color in the end product than in the case of fibers of green peas. The yellow color is especially advantageous when the meat substitute of the invention is used as dices in soup. It is possible according to the invention so substitute the pea fibers or part thereof with wheat fibers. Since wheat may cause allergy problems, it is however preferred to use pea fibers, although wheat fibers may be more cost-effective.

Addition of the (untextured) protein is done for two reasons, namely for the purpose of increasing the stability of the end-product by the formation of a protein web binding water or fat that is present or added to the product. In addition, protein is added to increase the nutritional value of the end product and to complement the protein supply for the user. The human body has a particular need for certain amino acids and proteins as a source thereof are therefore an important part of the diet.

Suitable proteins are proteins from pulses, such as pea proteins, lupine proteins, hulled beans. These proteins can be used either alone or in combination. The proteins are obtained by processing pulses (whole beans), whereby various types of preparations are obtained. These are identified in the art by the following indications: "isolates" (ca. 90% protein), "concentrates" (ca. 70% protein), and "flour" (ca. 50% protein). The production of these preparations lies within the common knowledge of the skilled person. Depending on the amount of protein in the end-product one of these protein products is added as an extra protein source. Preferably, the proteins are isolated from the pulses, such as peas, in such a manner that traces or larger amounts of starch are still present to further increase the gelling strength of the final product.

Various binding agents known in the art can be used. It is preferred to use binding agents derived from a vegetable source to preserve the vegetable nature of the end-product. Examples are starch, the alga-derived xanthane, alginates, carrageenans, citrates, acetates and tartrates. Potato starch is preferred because it has a relatively high starching temperature of above 60°C, so that the end-product can also be consumed at higher temperatures (hot meals).

Instead of the vegetable protein or in addition thereto, egg protein can be used as a binding agent. Egg protein leads to an even firmer product, which is desirable for the production of for example sausages and nuggets. When egg protein is used, the meat substitute is no longer suitable for veganists though.

Pea fibers are obtained during processing of the peas by separating them in a cyclone. They are added to further increase fat binding within the product. The pea proteins can be either an isolate, a concentrate or a flour. In addition seasoning, herbs, flavors, preservatives, colorings, and other food grade additives can be added.

A product of the invention can be prepared by means of the following steps:
a) washing the mushrooms and/or mushroom parts or adding water to the dried mushrooms or mushroom parts to rehydrate them;
b) cuttering the washed or rehydrated mushrooms and/or mushroom parts;
c) adding the fibers, protein(s) and binding agent(s) either prior to or during cuttering;
d) optionally adding vegetable fat or oil and water either prior to or during cuttering;
e) kneading all ingredients to obtain a paste;
f) optionally forming the paste into the desired shape(s);
g) optionally drying the shaped products thus obtained.

When an (dried) end-product is desired steps f) and g) are not optional. Forming the paste into the desired shape can for example be done by means of extrusion. Dices can also be cut out of larger tablets of dried or semi-dried paste. Mince can be obtained in a similar manner as minced meat. In addition, moulds can be used. For sausages, the paste is filled into sausage casings. All other common techniques for forming conventional meat products are also suitable for forming the end-product of the present invention.

In the Examples that follow, the invention will be further elucidated.

### EXAMPLES

### EXAMPLE 1

### Recipe for the production of a slice of "meat"

A dough was produced that has a good texture to serve as a basis for the production of a meal component that resembles a slice of meat (meat substitute).

| Recipe: | |
|---|---|
| Ingredient | Amount in kg (in %) |
| Dried mushrooms | 0.130 (1,3%) |
| Water | 4.699 (46,99%) |
| Pea protein | 0.866 (8,86%) |
| Pea fiber | 0.376 (3,76%) |
| Chicken egg protein | 0.254 (2.54%) |
| Vegetable fat | 0.996 (9,96%) |
| Salt | 0.137 (1,37%) |
| Carrageenan | 0.033 (0.26%) |
| Seasoning | 0.043 (0.43%) |

| Mixing | |
|---|---|
| Textured pea protein | 1,266 (12,26%) |
| Water | 1,226 (12,26%) |
| TOTAL | 10.000 (100%) |

The dried champignons, water, pea protein, pea fiber, chicken egg protein, vegetable fat, salt, carrageenan and seasoning were mixed in a cuttering device to a fine dough. After soaking the textured pea protein in water, the soaked protein is added to the dough and mixed therewith until a homogenous mass is obtained. The mass is the semi-finished product of the invention.

This mass can then be formed into the desired shape, such as slices to obtain the meal component, in this case a meat substitute. The slices can be fried, grilled or roasted like ordinary slices of meat.

### EXAMPLE 2

### Recipe for the production of a snack

A dough was produced that has a good texture to serve as a basis for the production of a meal component for use as a snack, for example resembling nuggets.

| Recipe: | |
|---|---|
| Ingredient | Amount in kg (in %) |
| Dried mushrooms | 0.131 (1.21%) |
| Water | 3.473 (32.21%) |
| Pea protein | 0.443 (4,12%) |
| Pea fiber | 0.376 (3.49%) |
| Chicken egg protein | 0.254 (2,36%) |
| Vegetable fat | 0.996 (9,24%) |
| Salt | 0.137 (1.27%) |
| Carrageenan | 0.026 (0.24%) |
| Seasoning | 0.043 (0.40%) |

| Mixing | |
|---|---|
| Textured pea protein | 2,452 (22.74%) |
| Water | 2,452 (22,74%) |
| TOTAL | 10,783 (100%) |

The dried champignons, water, pea protein, wheat fiber, chicken egg protein, vegetable oil, salt, carrageenan and seasoning were mixed in a cuttering device to a fine dough. After soaking the textured pea protein in water, the soaked protein is added to the dough and mixed therewith until a homogenous mass is obtained. This mass is grinded through a 3-4 mm plate. The mass (semi- finished product of the invention) leaving the plate can then be formed into the desired shape, such as nuggets, and coated with breadcrumbs to obtain the meal components, in this case a snack. The snack can for example be deep-fried.

### EXAMPLE 3

### Recipe for the production of sausages

A dough was produced that has a good texture to serve as a basis for the production of a meal component that has the form of a sausage.

| Recipe: | |
|---|---|
| Ingredient | Amount in kg (in %) |
| dried mushrooms | 0.171 (1.70%) |
| Water | 5.136 (51.02%) |
| pea protein | 1.150 (11.47%) |
| wheat fiber | 0.490 (4.89%) |
| chicken egg protein | 0.165 (1.64%) |
| Vegetable fat | 0.921 (9.18%) |
| Salt | 0.160 (1.60%) |
| Carrageenan | 0.026 (0.26%) |
| Seasoning | 0.050 (0.50%) |
| Fermented rice | 0.022 (0.22%) |

| Mixing | |
|---|---|
| textured pea protein | 0.869 (8.71%) |
| Water | 0.869 (17.34%) |
| TOTAL | 10.030 (100%) |

The dried champignons, water, pea protein, pea fiber, chicken egg protein, vegetable oil, salt, carrageenan and seasoning were mixed in a cuttering device to a fine dough. After soaking the textured pea protein in water, the soaked protein is added to the dough. The mass thus obtained is diminuted in the cutter until the desired coarseness is obtained. This cuttered mass is the semi-finished product of the invention.

This mass can then be filled into casings to obtain the meal component, in this case a vegetarian sausage. The sausages can be fried, grilled or roasted like ordinary meat sausages.

## Claims

1. Semi-finished product for use as or in a meal component, in particular a meat substitute, comprising at least the following ingredients:
- mushrooms or parts thereof;
- fibers;
- one or more proteins, at least a part of which is textured protein;
- one or more binding agents; and
- water.

2. Product as claimed in claim 1, wherein the mushrooms or parts thereof are rehydrated dried mushrooms.

3. Product as claimed in claim 1 or 2, wherein the fibers are vegetable fibers.

4. Product as claimed in claim 3, wherein the vegetable fibers are fibers from pulses.

5. Product as claimed in claim 4, wherein the fibers from pulses are pea fibers.

6. Product as claimed in claim 5, wherein the pea fibers are yellow pea fibers.

7. Product as claimed in claims 1-6, wherein the proteins are vegetable proteins.

8. Product as claimed in claim 7, wherein the vegetable proteins are proteins derived from pulses.

9. Product as claimed in claim 8, wherein the proteins are pea proteins.

10. Product as claimed in claim 9, wherein the pea proteins are yellow pea proteins.

11. Product as claimed in claim 8, wherein the proteins are proteins from lupine, pulses, such as pea proteins, or hulled beans.

12. Product as claimed in claims 1-11, wherein the textured protein is textured vegetable protein but not textured soy protein.

13. Product as claimed in claim 12, wherein the textured vegetable protein is textured pea protein.

14. Product as claimed in claims 1-13, wherein the binding agent is selected from the group consisting of starch, xanthane, alginates, carrageenans, phosphates, citrates and tartrates.

15. Product as claimed in claim 14, wherein the binding agent is potato starch.

16. Product as claimed in claims 1-15, wherein the binding agent is egg protein.

17. Product as claimed in claims 1-16 comprising:
- 0.5-5%, preferably 1-2% dried champignons;
- 1-8%, preferably 2-5% pea fibers;
- 2-15%, preferably 5-12% untextured pea proteins;
- 5-20%, preferable 8-18% textured pea protein
- 0.1-1% of a binding agent.

18. Product as claimed in claims 1-17 for use in the preparation of a meat substitute.

19. Meat substitute, obtainable by forming a semi-finished product as claimed in claims 1-18 into a desired shape and optionally further processing that shape.

20. Meat substitute as claimed in claim 19, wherein the semi-finished product is dried and diced.

21. Meat substitute as claimed in claim 19, wherein the semi-finished product is diced and dried.

22. Meat substitute as claimed in claim 19, wherein the semi-finished product is formed into sausages, nuggets, dices, strips, mince, burgers, extruded products, such as Dutch frikandels, or meatballs.

23. Method for preparing a product as claimed in claims 1-22 comprising the steps of:
a) washing the mushrooms and/or mushroom parts or adding water to the dried mushrooms or mushroom parts to rehydrate them;
b) cuttering the washed or rehydrated mushrooms and/or mushroom parts;
c) adding the fibers, protein(s) and binding agent(s) either prior to or during cuttering;
d) optionally adding vegetable fat or oil and water either prior to or during cuttering;
e) kneading all ingredients to obtain a paste;
f) optionally forming the paste into the desired shape(s);
g) optionally drying the shaped products thus obtained.
